Europäisches Patentamt

European Patent Office

Office européen des brevets

(11) Veröffentlichungsnummer: **0 002 728**
**A1**

(12) # EUROPÄISCHE PATENTANMELDUNG

(21) Anmeldenummer: 78101663.9

(22) Anmeldetag: 13.12.78

(51) Int. Cl.²: **G 09 F 7/18**, B 60 R 13/10,
F 16 B 41/00

(30) Priorität: 23.12.77 DE 2757542

(43) Veröffentlichungstag der Anmeldung: 11.07.79
Patentblatt 79/14

(84) Benannte Vertragsstaaten: **BE CH DE FR GB IT LU NL
SE**

(71) Anmelder: **Wilhelm Schumacher KG, Am Preist 5,
D-5912 Hilchenbach 1 (DE)**

(84) Benannte Vertragsstaaten: **BE CH DE FR GB IT LU NL
SE**

(71) Anmelder: **Ernst Hoffmann KG Schilderfabrik-
Gravieranstalt, Michelsbergstrasse 24, D-5900
Siegen 31 (DE)**

(84) Benannte Vertragsstaaten: **BE CH DE FR GB IT LU NL
SE**

(72) Erfinder: **Wittmann, Wolfgang, Ing., Am Preist 4,
D-5912 Hilchenbach 1 (DE)**
Erfinder: **Kring, Eberhard, Rensbachstrasse 2, D-5900
Siegen 31 (DE)**

(74) Vertreter: **Hemmerich, Friedrich Werner et al,
Hammerstrasse 2, D-5900 Siegen 1 (DE)**

(54) **Befestigungsvorrichtung für Schilder an einem Träger, insbesondere für Kraftfahrzeug-Kennzeichen.**

(57) Zur diebstahlsicheren Befestigung von Schildern (2),
z. B. Kraftfahrzeug-Kennzeichen, an einem Träger (3) werden das Schild (2) und den Träger (3) durchdringende
Kopfschrauben (4) mit einem flachen und glatten Kopfteil (7) sowie Eingriffgewindeteile (5), z. B. Muttern mit
einem außenseitig etwa kugelschicht- oder auch kegelstumpfförmigen Gewinde-Ringteil (9) und einem mit diesem über eine Sollbruchstelle (11) einstückig in Verbindung gehaltenen, gewindelosen Werkzeug-Angriffsteil (12),
benutzt. Zur weiteren Verbesserung der Sicherungswirkung wird der flache und glatte Kopfteil (7) der Schraube
(4) mit einem länglichen, z. B. rechteckigen, langrunden
oder elliptischen Grundriß (18, 19) versehen. Außerdem
wird das vom Schraubenschaft (6) durchdrungene Schild
(2) an seiner Rückseite im Anlagebereich des Kopfteils
(7) mit einer Sollbruchstelle (22) ausgestattet, die sich
über einen Flächenbereich (2') erstreckt, welcher wesentlich größer ist als der vom Kopfteil (7) übergriffene bzw.
abgedeckte Flächenbereich (18, 19). Bei dem Versuch
eines gewaltsamen Entfernens des Schildes (2) werden in
dieses im Bereich der Befestigungsvorrichtung (1) große
Löcher gerissen, welche eine Weiterverwendung desselben
unmöglich machen.

PATENTANWÄLTE   F.W. HEMMERICH · GERD MÜLLER · D. GROSSE · F. POLLMEIER

~ | ~

f.th                                          73 o38

Wilhelm Schumacher KG, Am Preist 5, 5912 Hilchenbach 1  und
Ernst Hoffmann KG Schilderfabrik-Gravieranstalt, Michelsbergstraße 24, 59oo Siegen 31

Befestigungsvorrichtung für Schilder an einem Träger, insbesondere für Kraftfahrzeug-Kennzeichen

Die Erfindung betrifft eine Befestigungsvorrichtung für Schilder an einem Träger, insbesondere für Kraftfahrzeug-Kennzeichen,
bestehend aus einer das Schild und dessen Träger durchdringenden
Kopfschraube und einem Eingriffsgewindeteil, z.B. einer Mutter,
bei der die Schraube mit einem flachen und glatten Kopfteil versehen ist und an dessen Unterseite und/oder an dem unmittelbar daran anschließenden Teil des Schaftes in das Material des Schildes und gegebenenfalls auch des Trägers eindringende Verankerungsformteile aufweist, während das Eingriffsgewindeteil, z.B. die
Mutter, aus einem außenseitig etwa kugelschicht- oder auch
kegelstumpfförmigen Gewinde-Ringteil und einem mit diesem
über eine Sollbruchstelle einstückig in Verbindung gehaltenen,
gewindelosen Werkzeug-Angriffsteil besteht.

Eine derartige Befestigungsvorrichtung ist durch die DE-OS
26 19 559 bekannt. Mit ihr wird bereits gegenüber früheren
Vorschlägen eine wesentliche Verbesserung erzielt. Durch die
Verankerungsformteile der Schraube wird diese nämlich einerseits gegen unerwünschte Verdrehung festgehalten. Andererseits
dringen die Verankerungsformteile auch in das Material des
zu befestigenden Schildes ein, so daß dieses sich nur durch
Ausreißen, d.h. durch unkontrollierbares Beschädigen, entfernen
läßt. Wird beim Anziehen des Eingriffsgewindeteils ein bestimmtes, durch entsprechende Bemessung der Sollbruchstelle einstellbares Drehmoment überschritten,  dann reißt das gewindelose
Werkzeug-Angriffsteil vom Gewinde-Ringteil ab. Aufgrund seiner
kugelschicht- oder kegelstumpfförmigen Gestalt läßt sich dann
das Gewinde-Ringteil nicht mehr mit einem Betätigungswerkzeug
erfassen.

Durch die besondere Ausgestaltung der Befestigungsvorrichtung
nach der DE-OS 26 19 559 wird die unbefugte Benutzung
von Kraftfahrzeug-Kennzeichen zuverlässig verhindert, weil jeder Versuch, die Befestigungsvorrichtung zu lösen, zunichte
gemacht wird und zwangsläufig zur Beschädigung des Kennzeichen-
Schildes in dem vom Kopfteil der Schraube erfaßten Bereich führt.

Nach der DE-OS 26 19 559 hat der flache und glatte Kopfteil der
Schraube die Form eines Linsenkopfes, also einen kreisförmigen
Grundriß. Dabei ist der Kopfdurchmesser verhältnismäßig gering
gehalten, damit durch diesen Schraubenkopf die Ablesbarkeit
der Schilder, und zwar insbesondere der Kraftfahrzeug-Kennzeichen, möglichst wenig beeinträchtigt wird.

Die Sicherungswirkung der Befestigungsvorrichtung selbst ist zwar
durch den verhältnismäßig kleinen Schraubenkopf nicht gefährdet.
Es könnte jedoch bei dem Versuch, das Kennzeichen-Schild gewaltsam zu entfernen, der Fall eintreten, daß das Material unmittelbar längs der Konturen des Schraubenkopfes ausreißt, so daß
im Kennzeichen-Schild ein nur verhältnismäßig kleines Loch entsteht, welches sich für den unbefugten Gebrauch dann durch eine
Schraube mit etwas größerem Kopfteil wieder abdecken läßt.

Die Erfindung bezweckt eine solche Weiterbildung der Befestigungsvorrichtung nach der DE-OS 26 19 559, daß deren Sicherheitsfaktor gegen unbefugtes Entfernen und Benutzen der Kennzeichen-Schilder wesentlich erhöht wird.

Die Lösung dieser Aufgabe zeichnet sich erfindungsgemäß im wesentlichen dadurch aus, daß der flache und glatte Kopfteil der Schraube einen länglichen, z.B. rechteckigen, langrunden oder elliptischen Grundriß aufweist und das vom Schraubenschaft durchdrungene Schild, insbesondere an seiner Rückseite, eine im Anlagebereich des Kopfteils vorgesehene Sollbruchstelle besitzt, die sich über einen Flächenbereich erstreckt, welcher wesentlich größer ist als der vom Kopfteil übergriffene bzw. abgedeckte Flächenbereich.

Bei dem Versuch einer gewaltsamen Entfernung des Kennzeichen-Schildes werden in dieses im Bereich der Befestigungsvorrichtungen große Löcher gerissen, die eine Weiterverwendung desselben unmöglich machen.

Erfindungsgemäß hat es sich als besonders zweckmäßig erwiesen, wenn die Längenabmessung des Kopfteiles der Schraube dem Zwei- bis Dreifachen seiner Breite entspricht und der durch die Sollbruchstelle eingegrenzte Flächenbereich des Schildes zumindest in seiner Breite die Breite des Schrauben-Kopfteils ebenfalls um das Zwei- bis Dreifache übersteigt.

Es hat sich weiterhin als empfehlenswert erwiesen, die Sollbruchstellen im Schild durch eingeprägte oder eingestochene Rillen zu bilden, die vorzugsweise einen kreisringförmigen Verlauf haben.

Die Sicherheit der Befestigungsvorrichtung gegen gewaltsame Zerstörung kann erfindungsgemäß weiterhin dadurch erhöht werden, daß der Kopf und das Schaftende der Schraube einsatzgehärtet sind, während ihr vom Träger des Schildes und dem Gewinde-Ringteil aufgenommener Teilabschnitt des Schaftes ungehärtet ist. Als vorteilhaft hat es sich erwiesen, dem Schraubenkopf und dem Schaftende eine Härte von etwa 600 Vickers bei einer Einsatztiefe von 0,3 bis 0,6 mm zu geben. Ein Ansägen, Anfeilen oder Anbohren der freiliegenden Schraubenabschnitte wird hierdurch ganz be-

PATENTANWÄLTE  F.W. HEMMERICH · GERD MÜLLER · D. GROSSE · F. POLLMEIER

- 4 -

trächtlich erschwert. Da der mittlere Schaftabschnitt weich
bleibt, ist die Schraube auch widerstandsfähig gegen Abschlagen oder Abmeißeln, d.h., es wird verhindert, daß der Schraubenkopf durch schlagartige Beanspruchungen abplatzen kann. Außerdem lassen sich durch den weichen Teilabschnitt der Schraube Wärmespannungen ausgleichen, die sich bspw. im Winter durch hohe
Temperaturunterschiede einstellen. Da der ungehärtete Teil des
Schraubenschaftes sich an Stellen befindet, die von außen nicht
zugänglich sind, ist er mit Werkzeugen, wie Sägen, Feilen und
Bohrern nicht erreichbar.

Nach einem weiterbildenden Erfindungsmerkmal hat es sich als
zweckmäßig erwiesen, den die Sollbruchstellen bildenden Rillen
einen sägezahnförmigen Querschnitt mit einer etwa senkrecht zur
Ebene des Schildes gerichteten Außenflanke und einer flach gegen
diese Ebene geneigten Innenflanke zu geben.

Schließlich ist es auch noch wichtig, daß der Gewinde-Ringteil
an seiner Auflagefläche eine Radialverzahnung aufweist, deren
Einzelzähne jeweils eine in Anzugsrichtung schwach ansteigende
Flanke und eine der Löserichtung entgegengesetzte steile Flanke
haben. Da auch der Gewinde-Ringteil einsatzgehärtet ist, graben
sich die Radialverzahnungen in die Auflagefläche des das Kennzeichen-Schild haltenden Trägers ein und verhindern dadurch das
unbefugte Lösen des Gewinde-Ringteils vom Schraubenschaft.

Weitere Merkmale und Vorteile des Erfindungsgegenstandes werden
nachfolgend anhand einer Zeichnung ausführlich beschrieben.
Es zeigt

Fig. 1 in räumlicher Sprengdarstellung die wesentlichen Elemente
der erfindungsgemäßen Befestigungsvorrichtung, etwa in
natürlicher Größe,

Fig. 2 in größerem Maßstab und im Längsschnitt die Befestigungsvorrichtung nach Fig. 1 in an einem Träger für das Schild
montiertem Zustand,

PATENTANWÄLTE  F.W. HEMMERICH · GERD MÜLLER · D. GROSSE · F. POLLMEIER

- 5 -

Fig. 3 eine Ansicht in Pfeilrichtung III der Fig. 2,

Fig. 4 eine der Fig. 3 entsprechende Darstellung, jedoch
mit im Bereich der Befestigungsvorrichtung unbrauchbar
gewordenem Kennzeichen-Schild und

Fig. 5 in Seitenansicht das ein wesentliches Element der
Befestigungsvorrichtung bildende Gewinde-Ringteil.

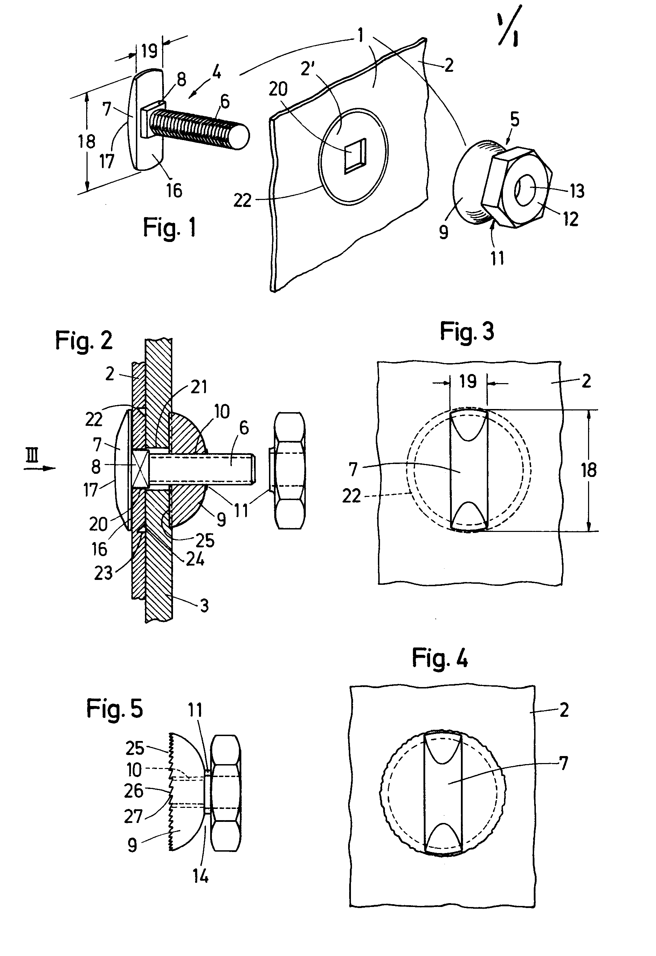

In Fig. 1 sind die Einzelteile einer Befestigungsvorrichtung 1
für Schilder 2 an einem Träger 3, bspw. von Kraftfahrzeug-Kennzeichen am Stoßfänger oder an Karosserieteilen des Fahrzeuges,
dargestellt. Sie zeigt eine Kopfschraube 4 und einen Eingriffs-
Gewindeteil 5 in Form einer Mutter sowie auch den mit der Kopfschraube 4 zusammenwirkenden Bereich 2' des Schildes 2.

Der Schaftteil 6 der Kopfschraube 4 ist nahezu auf seiner ganzen
Länge mit Gewinde versehen und schließt sich über ein als Mehrkant- insbesondere Vierkantansatz ausgebildetes Verankerungsformteil 8 an das Kopfteil 7 einstückig an.

Das Kopfteil 7 hat eine ebene Auflagefläche 16 und eine flach
gewölbte Oberfläche 17. Es weist eine längliche, und zwar im
wesentlichen rechteckige Grundrißform auf, wobei seine Länge 18
um das zwei- bis dreifache größer als seine Breite 19 bemessen
ist.

Das Eingriffs-Gewindeteil 5 besteht aus einem an seiner Außenseite kugelschicht- oder kegelstumpfförmigen Gewinderingteil 9
mit Innengewinde 1o und einem mit diesem über eine Sollbruchstelle 11 einstückig in Verbindung gehaltenen Werkzeug-Angriffsteil 12 in Form eines Mehrkant- insbesondere Sechskantkopfes.
Dieser Werkzeug-Angriffsteil 12 ist mit einer glatten Bohrung
13 ausgestattet, deren Durchmesser mindestens gleich, vorzugsweise aber etwas größer als der Nenndurchmesser des Gewindes 1o
im Gewinde-Ringteil 9 ausgeführt ist.

- 6 -

Die Sollbruchstelle 11 des Eingriffs-Gewindeteils 5 ist dabei
bestimmt durch eine eingestochene Umfangsnut 14 und läßt sich
daher durch Variation der Einstichtiefe auf das jeweils gewünschte Abwürgemoment einstellen.

Den Fig. 1 und 2 ist zu entnehmen, daß zum Befestigen des Schildes 2 am Träger 3 die Kopfschraube 4 mit ihrem Schaft 6 einerseits durch ein Loch 2o im Schild 2 und andererseits durch ein
entsprechendes Loch 21 im Träger 3 gesteckt wird, bis ihr Kopfteil 7 mit seiner Auflagefläche 16 auf der Außenseite des
Schildes 2 zur Anlage kommt. Dann wird das Eingriffs-Gewindeteil 5 mit Hilfe eines Schraubenschlüssels auf dem Schaftteil 6
der Schraube 4 angezogen. Da die Löcher 2o und 21 im Schild 2
bzw. im Träger 3 eine Umrißform haben, die dem Verankerungsformteil 8 entspricht, ergibt sich hierdurch eine formschlüssige
Eingriffsverbindung, so daß die Schraube 4 gegen Relativdrehung
gesichert wird.

Sobald beim Anziehen des Eingriffs-Gewindeteils 5 an der Sollbruchstelle 11 das Abwürgemoment überschritten wird, reißt das
Werkzeug-Angriffsteil 12 vom Gewinde-Ringteil 9 ab, wie das in
Fig. 2 angedeutet ist. Da das Gewinde-Ringteil 9 eine kugelschicht- oder kegelstumpfförmige Oberfläche hat, läßt es sich
nicht mehr mit einem Schraubenschlüssel oder mit einer Zange
festhalten. Ein Lösen der Befestigungsvorrichtung wird daher
verhindert.

Ein wichtiges Merkmal der Befestigungsvorrichtung ergibt sich
noch aus den Fig. 1 und 2. Hiernach ist nämlich Schild 2,
vorzugsweise an seiner Rückseite, im Anlagebereich des Kopfteils 7 mit einer eingearbeiteten Sollbruchstelle 22 versehen,
die sich über einen Flächenbereich erstreckt, welcher wesentlich größer ist als der vom Kopfteil 7 übergriffene bzw. abgedeckte Flächenbereich. Die Sollbruchstelle 22 wird von einer eingeprägten oder eingestochenen Rille gebildet, die vorzugsweise
kreisringförmig verläuft, wobei der Kreisring einen Durchmesser
hat, der etwa gleich der Länge 18 des Kopfteils 7 ist. Diese

PATENTANWÄLTE  F.W. HEMMERICH · GERD MÜLLER · D. GROSSE · F. POLLMEIER

– 8 –

Rille hat einen sägezahnförmigen Querschnitt mit einer etwa
senkrecht zur Ebene des Schildes 2 gerichteten Außenflanke
23 und einer flach gegen diese Ebene geneigten Innenflanke
24.

Wenn nach dem Anbringen der Befestigungsvorrichtung 1 versucht wird, das Schild 2 gewaltsam vom Träger 3 zu entfernen,
dann reißt das Schild 2 längs der Sollbruchstelle 22 aus und es
ergibt sich in ihm ein Loch, daß wesentlich größer ist als der
vom Kopfteil 7 erfaßbare Flächenbereich des Schildes 2. Eine
Weiterverwendung des Schildes 2 ist damit nicht mehr möglich.

Damit die Befestigungsvorrichtung 1 nicht durch Anbohren, Anfeilen
oder Ansägen zerstört werden kann, ist einerseits das Kopfteil
7 und andererseits das freie Ende des Schraubenschaftes 6 einsatzgehärtet und zwar vorzugsweise mit einer Einsatztiefe von
0,3 bis 0,6 mm auf eine Härte von 600 Vickers. Der mittlere
Teil des Schaftes 6, und zwar insbesondere der vom Gewinde-
Ringteil 9 und vom Träger 3 aufgenommene Gewindeabschnitt
ist jedoch ungehärtet.

Der ungehärtete Abschnitt der Kopfschraube 4 stellt dabei sicher,
daß der Schraubenkopf nicht durch Abschlagen oder Abmeißeln
abgesprengt werden kann. Außerdem ermöglicht er auch den Ausgleich von Wärmespannungen, die, insbesondere im Winter, auftreten und dann bis etwa 50°C betragen können.

Erwähnenswert ist schließlich auch noch, daß der Gewinde-Ringteil 9 an seiner Auflagefläche mit einer Radialverzahnung 25
versehen werden kann, deren Einzelzähne jeweils eine in Anzugsrichtung schwach ansteigende Flanke 26 und eine der Löserichtung entgegengesetzte steile Flanke 27 haben. Hierdurch wird
einem Lockern des Gewinde-Ringteils 9 entgegengewirkt, weil
sich die Radialverzahnung 25 in die Rückseite des Trägers 3
formschlüssig eingräbt.

- 8 -

Ein Vorteil der länglichen, z.B. rechteckigen, langrunden oder elliptischen Form des Kopfteiles 7 besteht darin, daß dieser ohne Schwierigkeiten auch zwischen den senkrechten Abschnitten der in das Schild 2 eingeprägten Schriftzeichen Platz hat und daß er andererseits unter Umständen auch als Bindestrich zwischen aufeinanderfolgenden Schriftzeichen-Gruppen verwendet werden kann.

PATENTANWÄLTE  F.W. HEMMERICH · GERD MÜLLER · D. GROSSE · F. POLLMEIER

f.th                          73 o38
Wilhelm Schumacher KG, Am Preist 5, 5912 Hilchenbach 1 und
Ernst Hoffmann KG Schilderfabrik-Gravieranstalt, Michelsbergstraße 24, 59oo Siegen 31

Patentansprüche

1. Befestigungsvorrichtung für Schilder an einem Träger, insbesondere für Kraftfahrzeug-Kennzeichen, bestehend aus einer
   das Schild und dessen Träger durchdringenden Kopfschraube
   und einem Eingriffsgewindeteil, z.B. einer Mutter, bei
   welcher die Schraube mit einem flachen und glatten Kopfteil
   versehen ist und an dessen Unterseite und/oder an dem unmittelbar daran anschließenden Teil des Schaftes in das
   Material des Schildes und gegebenenfalls auch des Trägers
   eindringende Verankerungsformteile aufweist, während das
   Eingriffsgewindeteil, z.B. die Mutter, aus einem außenseitig
   etwa kugelschicht- oder auch kegelstumpfförmigen Gewinde-
   Ringteil und einem mit diesem über eine Sollbruchstelle einstückig  in Verbindung gehaltenen, gewindelosen Werkzeug-
   Angriffsteil besteht,
   d a d u r c h   g e k e n n z e i c h n e t ,
   daß der flache und glatte Kopfteil (7) der Schraube (4) einen
   länglichen, z.B. rechteckigen, langrunden oder elliptischen,
   Grundriß aufweist (18,19) und das vom Schraubenschaft (6)
   durchdrungene Schild (2), insbesondere an seiner Rückseite,
   eine im Anlagenbereich des Kopfteils (7) vorgesehene Sollbruchstelle (22) besitzt, die sich über einen Flächenbereich
   (2') erstreckt, welcher wesentlich größer ist als der vom
   Kopfteil (7) übergriffene bzw. abgedeckte Flächenbereich.

- 2 -

2. Befestigungsvorrichtung nach Anspruch 1,
   d a d u r c h   g e k e n n z e i c h n e t ,
   daß die Längenabmessung (18) des Kopfteils (7) der Schraube
   (4) dem Zwei-bis Dreifachen seiner Breite (19) entspricht
   und der durch die Sollbruchstelle (22) eingegrenzte Flächenbereich (2') des Schildes (2) zumindest in seiner Breite
   die Breite (19) des Schrauben-Kopfteils (7) ebenfalls um
   das Zwei- bis Dreifache übersteigt (Fig. 3 und 4).

3. Befestigungsvorrichtung nach den Ansprüchen 1 und 2,
   d a d u r c h   g e k e n n z e i c h n e t ,
   daß die Sollbruchstelle (22) im Schild (2) aus einer eingeprägten oder eingestochenen Rille, insbesondere einer
   kreisringförmigen Rille, besteht (Fig. 1 und 2).

4. Befestigungsvorrichtung nach den Ansprüchen 1 bis 3,
   d a d u r c h   g e k e n n z e i c h n e t ,
   daß der Kopf (7) und das Ende des Schaftes (6) der Schraube
   (4) einsatzgehärtet sind, während ihr vom Träger (3) und dem
   Gewinde-Ringteil (9) aufgenommener Teilabschnitt des Schaftes
   ungehärtet ist.

5. Befestigungsvorrichtung nach den Ansprüchen 1 bis 4,
   d a d u r c h   g e k e n n z e i c h n e t ,
   daß die Rille (22) einen sägezahnförmigen Querschnitt mit
   einer etwa senkrecht zur Ebene des Schildes (2) gerichteten
   Außenflanke (23) und einer flach gegen diese Ebene geneigte
   Innenflanke (24) hat (Fig. 2).

6. Befestigungsvorrichtung nach den Ansprüchen 1 bis 5,
   d a d u r c h   g e k e n n z e i c h n e t ,
   daß der Gewinde-Ringteil (9) an seiner Auflagefläche eine
   Radialverzahnung (25) aufweist, deren Einzelzähne jeweils
   eine in Anzugsrichtung schwach ansteigende Flanke (26) und
   eine der Löserichtung entgegengesetzte steile Flanke (27)
   haben (Fig. 5).

Fig. 1

Fig. 2

Fig. 3

Fig. 4

Fig. 5

0002728

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 2 501 474 (WILLIAM T. MARTIN) <br><br>* Ansprüche 1-3; Spalte 2, Zeilen 10-55; Spalte 3, Zeilen 50-58; Figuren 1-8 * | 1,3 |
| | DE - A - 2 527 751 (EWIKON ENT- WICKLUNGS- UND KONSTRUKTIONS GmbH) <br><br>* Ansprüche 1,5,6; Seite 5, Absatz 5; Figuren 2,3 * | 1,3 |
| | DE - A - 2 524 234 (EWIKON ENT- WICKLUNGS- UND KONSTRUKTIONS GmbH) <br><br>* Ansprüche 1-4,6,8; Seite 3, Absatz 5; Figuren 1,2 * | 1,4 |
| | US - A - 2 046 571 (DEWEY M. McCAIN) <br><br>* Anspruch 1; Seite 1, Spalte 1, Zeilen 1-17; Seite 2, Spalte 2, Zeilen 1-21; Figuren 1-5 * | |
| | US - A - 2 465 548 (ST. CLAIR MACHINE PRODUCTS COMP.) <br><br>* Anspruch; Spalte 1, Zeile 50 bis Spalte 2, Zeile 17; Figuren 3,4 * | 1,2 |
| | DE - A - 2 541 826 (ALCAN ALUMINIUM WERKE GmbH) <br><br>* Ansprüche 1,6,12-15; Figuren 1-3 * | 1,6 |

**KLASSIFIKATION DER ANMELDUNG (Int.Cl.²)**

G 09 F 7/18
B 60 R 13/10
F 16 B 41/00

**RECHERCHIERTE SACHGEBIETE (Int. Cl.²)**

G 09 F 7/18
7/00
B 60 R 13/10
F 16 B 41/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 26-03-1979 | FRANSEN |

EPA form 1503.1  06.78